# EUROPEAN PATENT APPLICATION

(11) **EP 3 269 498 A1**
(43) Date of publication of application: **17.01.2018**
(21) Application number: 17178379.8
(22) Date of filing: 28.06.2017
(51) Int. Cl.: B23Q 11/10, B23P 25/00

(54) **MACHINING USING CRYOGENIC COOLING ON A CUTTING TOOL WHILE HEATING A WORK PIECE**

(30) Priority: 11.07.2016 US 201615207473
(71) Applicant: United Technologies Corporation, Farmington, CT 06032 (US)
(72) Inventor: BARNAT, Krzysztof, Berlin, CT Connecticut 06037 (US); REED, Gordon Miller, Plantsville, CT Connecticut 06479 (US)
(74) Representative: Power, Philippa Louise

(57) **Abstract**

The invention improves machining methods by using cryogenic cooling techniques in combination with a heat source (16) to simultaneously cool a cutting tool (12; 24) while heating a work piece (14) to make the work piece (14) more pliable while increasing efficiency and/or longevity of the cutting tool (12; 24).

## Description

### BACKGROUND

Machining has been used to shape raw materials for decades. Generally, machining techniques take a work piece (a raw material) and cut it into a final, desired shape through a controlled material-removal process. Modem machining processes use a variety of cutting tools to shape work pieces, including drills, turning inserts, endmills, taps, or threadmills. These various tools can be used for machining such as turning, milling and holemaking processes.

As cutting tools are used in machining processes, they are worn down. Over time, the application of cutting tools to work pieces dulls the tools. This is caused in part by the heat and friction created where the tool meets the work piece. Thus, machining cutting tools are often cooled to increase tool longevity.

One such method of cooling cutting tools is cryogenic cooling. These methods utilize cryogenic coolants, such as liquid nitrogen or carbon dioxide, to cool the tool. Standard apparatuses for cryogenic cooling are produced by 5ME and Air Products. 5ME's cryogenic machining scheme can be set up with a machining system and runs a coolant through the existing machining system. In contrast, Air Products' IceFly® machining technology is an external scheme that can be applied to the surface of machining systems. Both types of commercially available systems cool a tool used in machining methods.

### SUMMARY

A machining system includes a cutting tool configured to cut a work piece, a cooling scheme configured to cool the cutting tool, and a heat source located upstream relative to the cutting tool. The cooling scheme includes a cryogenic coolant and circuitry configured to supply the cryogenic coolant to the cutting tool. The heat source is directed at the work piece, wherein the heat source is configured to heat the work piece before the heated work piece is machined by the cutting tool.

A method for machining includes providing instructions to a machining system, wherein the instructions direct the movement and cutting action of a cutting tool, the movement and heating action of a heat source; cooling the cutting tool with a cryogenic coolant; applying heat to the work piece upstream through the heat source according to the instructions, wherein heating the work piece occur before the work piece reaches the cutting tool; and cutting the work piece according to the instructions.

A machining system includes a cutting tool configured to cut a work piece, means for cooling the cutting tool, and a heat source located upstream relative to the cutting tool. The cooling scheme includes a cryogenic coolant and circuitry configured to supply the cryogenic coolant to the cutting tool. The heat source is directed at the work piece, wherein the heat source is configured to heat the work piece before the cutting tool cuts the work piece.

### BRIEF DESCRIPTION OF THE DRAWINGS

FIG. 1A is a schematic diagram of one embodiment of a machining system using cryogenic coolant to cool the tool and a heat source to heat the work piece.
FIG. 1B is a schematic diagram of another embodiment of a machining system using cryogenic coolant to cool the tool and a heat source to heat the work piece.
FIG. 2 is a flow chart depicting a method for machining a work piece.

### DETAILED DESCRIPTION

The present disclosure presents a machining system including both a cryogenic cooling method for cooling the cutting tool, and a heat source to heat the surface of the work piece. The combination of cooling and heating simultaneously allows for increased tool life and sustainability, and allows for the work piece to be easier to cut. The cutting tool can either be used at the same rate for a longer period of time, or be used more aggressively at a faster rate to finish the machining process faster.

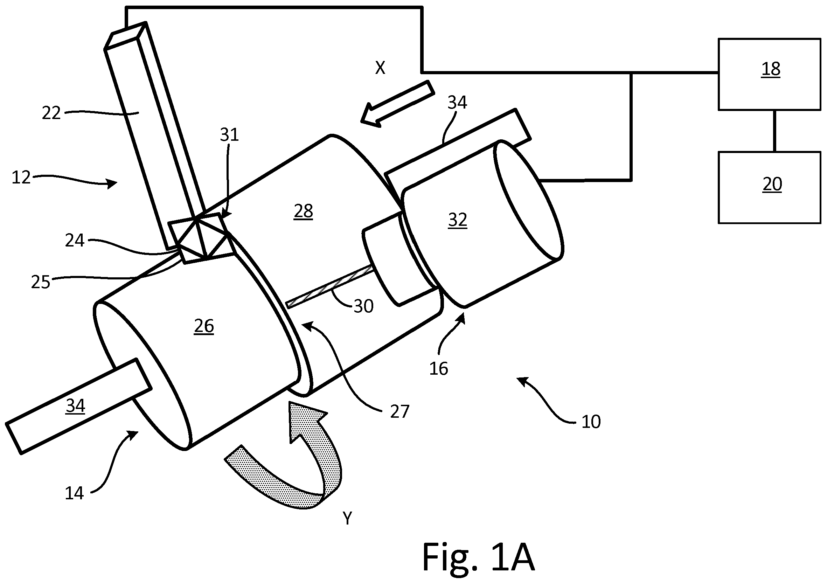

FIG. 1A is a schematic diagram of a machining system using cryogenic coolant to cool a tool and a heat source to heat a work piece. Machining system 10 includes cutting tool 12, work piece 14, heat source 16, controller 18 and user interface 20. Cutting tool 12 includes tool holder 22 and tool 24. Work piece 14 includes cutting area 25, machined end 26, heating area 27, and un-machined end 26. Heat source 16 includes laser 30 and heat source mount 32. Work piece 14 moves along feed 34 indicated by arrow X and is rotated in the direction indicated by arrow Y.

In machining system 10, work piece 14 moves along feed 34 in the direction of arrow X and is rotated in the direction of arrow Y. Feed 34 can be a beam, track, or other means of moving work piece 14 as it is being machined at cutting area 25 by tool 12. Simultaneously, work piece 14 is being rotated in direction Y as work piece is moved in direction X on feed 34. As it is moving, portion 27 of work piece 14 is heated by heat source 16. While portion 27 is heated, work piece 14 is rotated in direction Y so that cutting area 25 interacts with tool 12. Tool 12 machines work piece 14 at cutting area 25 downstream of heated portion 27. Controller 18 can direct movement and cutting of tool 12, cooling of tool 12 through cryogenic cooling, application of heat from heat source 16, and movement of feed 34. User interface 20 allows for programming of controller 18.

Machining system 10 can be used to take work piece 14, a raw material, and cut work piece 14 into a final, desired shape through a controlled material-removal process. This is accomplished by directing tool 12 to cut, shape, drill, press, or otherwise shape work piece 14 at cutting area 25. Tool 12 can be, but is not limited to, a drill, turning insert, endmill, tap, or threadmill. Tool 12 includes two parts: cutting tool 24 and tool holder 22. Cutting tool 24 is secured to tool holder 22, which allows movement of cutting tool 24 as directed by controller 18. Controller 18 is a computer numerical control or similar program which can provide instructions to tool 12 on cutting type, depth, direction, and timing. Instructions can be programmed via user interface 20, connected to controller 18.

Cutting tool 24 is cooled by a cryogenic coolant system. Cryogenic coolants are typically liquefied gases, such as liquid nitrogen, hydrogen, or carbon dioxide. Liquid nitrogen is particularly useful for machining purposes as it can be used to chill cutting tool 24 without any environmental run off. A coolant, such as liquid nitrogen, can be applied to cutting tool 24 through two methods: externally, through a nozzle to cutting tool 24, or internally, through the inside of cutting tool 24. In FIG. 1A, the cryogenic coolant is applied through an internal system of channels 31. Channels 31 run through tool 12 and deliver a cryogenic coolant to the inside of cutting tool 24. This cools cutting tool 24 and reduces the wear and tear of tool 12 throughout its lifetime. This can increase tool 12's life span, or increase the cutting speed at which tool 12 can be used without breaking.

At the same time that cutting tool 24 is cooled with a cryogenic coolant system, work piece 14 is heated. Work piece 14 includes machined end 26 and un-machined end 26. Machined end 26 has already been machined by tool 12, and has been cut or formed to the desired shape. Un-machined end 26 has yet to be machined and is raw material. Work piece 14 moves along feed 34 in the direction of arrow X, and is heated by heat source 16 as it moves along. Similarly, work piece 14 is worked on by tool 12 as it moves along feed 34. Simultaneously, work piece 14 is rotated in the direction of arrow 36 to allow tool 12 to work on all surfaces of work piece 14.

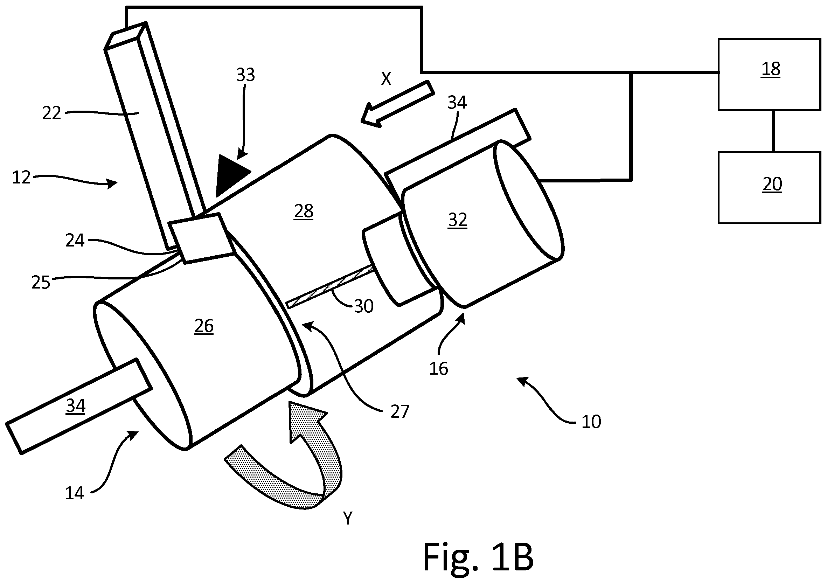

While work piece 14 is moving along feed 34, portion 27 of work piece 14's surface, between machined end 26 and un-machined end 26, is being heated from heat source 16. Portion 27 is upstream from cutting tool 24 and has not yet been machined by tool 12. In FIG. 1, heat source 16 includes laser 30 and heat source mount 32. Heat source mount 32 secures laser 30, and controller 18 is connected to heat source mount 32 such that controller 18 can direct the movement and intensity of laser 30. Heat source 16 can alternatively include heating coils or other heating devices instead of laser 30. Laser 30 is focused to heat the surface of work piece 14 which has not yet been worked on or cut by tool 12. Thus, portion 27 is heated by heat source 16 upstream of tool 12 in the machining process.

FIG. 1B is a schematic diagram of a machining system using cryogenic coolant to cool a tool and a heat source to heat a work piece in a different embodiment than FIG. 1A. Unless otherwise noted, all parts of FIG. 1B are the same as those in FIG. 1A and are connected in the same fashion.

In FIG. 1B, cutting tool 24 is cooled by a cryogenic coolant system which is configured differently than the cooling system described in reference to FIG. 1A. As discussed earlier, a cryogenic coolant, such as liquid nitrogen, can be applied to cutting tool 24 through two methods: externally, through a nozzle to cutting tool 24, or internally, through the inside of cutting tool 24. In FIG. 1B, the cryogenic coolant is applied through external nozzle 33, which sprays cryogenic coolant on an external surface of cutting tool 24. This cools cutting tool 24 and reduces the wear and tear of tool 12 throughout its lifetime. This can increase tool 12's life span, or increase the cutting speed at which tool 12 can be used without breaking.

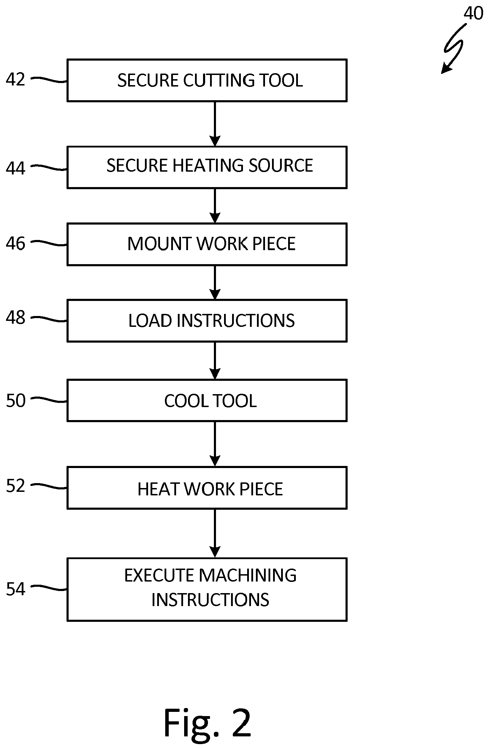

FIG. 2 is a flow chart depicting a method of machining a work piece while cooling a cutting tool and heating a work piece simultaneously. Process 40 includes securing a cutting tool (step 42), securing a heating source (step 44), mounting a work piece (step 46), loading instructions for the tool and heat source (48), cooling the tool (step 50), heating the work piece (52) and executing the machining instructions (step 54).

Method 40 begins with securing a cutting tool (step 42), such as cutting tool 24 in FIG. 1, and a heating source (step 44), such as heating source 16 in FIG. 1. Both cutting tool 24 and heating source 16 should be mounted such that they can be moved and controlled by controller 18. Typically, cutting tool 24 and heating source 16 will be mounted on separate tool holder 22 and heat source mount 32, respectively, to secure the items above or around feed 34 through which a work piece will travel. (In FIG. 1, the direction feed 34 moves is indicated by arrow X).

Next, a work piece, such as work piece 14, is mounted on feed 34 (step 46). Feed 34 can be a shaft or rod which can move work piece 14 along as tool 12 machines work piece 14. Work piece 14 can be any raw or uncompleted material which will be machined. Work piece 14 is angled such that it is properly aligned with cutting tool 24 and heat source 16. Specifically, the area of work piece 14 heated by heat source 16 is located upstream relative cutting tool 24, such that the surface of work piece 14 will be heated before it is worked on by cutting tool 24. Heat source 16 is arranged to heat a particular part of work piece 14's surface, portion 27 in FIG. 1.

Once work piece 14 is mounted, instructions for both cutting tool 24 and heat source 16 are written or loaded (step 48) into controller 18, typically through user interface 20. Controller 18 can be a simple computer numerical control, or a more complex machine, depending on the machining needs. The instructions specify movement and action of cutting tool 24, including timing and depth, in addition to movement and intensity of heating source 16. The instructions specify where heat source 16 will be focused and for how long prior to work piece 14 being worked on by tool 12. Instructions programmed in controller 18 can be edited or altered as needed later in method 40.

Before the instructions are executed, cutting tool 24 is cooled with a cryogenic coolant (step 50). Cutting tool 24 can be continuously cooled throughout the process to increase tool longevity and prevent dulling of cutting tool 24. A cryogenic coolant, such as liquid nitrogen, is run through the inside of the cutting tool with internal channels 31, or applied via nozzle 33 to the outside of cutting tool 24, depending on the needs of the machining process. Cooling of tool 12 can be continued and adjusted throughout the reminder of method 40.

Additionally, heat source 16 should be turned on and begin to heat portion 27 of work piece 14 (step 52). The heating of portion 27 (i.e. a portion of work piece 14 upstream of cutting tool 24) will occur continuously throughout execution of the instructions by controller 18. Portion 27 is heated upstream of cutting zone 25, such that cutting zone 25 of work piece 14 is heated before being rotated in direction Y and cut by tool 12.

Finally, the instructions are executed (step 54). Throughout executing of the machining instructions, actions of tool 12, cooling by the cryogenic cooling system (31 or 33), and heating by heat source 16 can be adjusted as needed. Throughout execution of the instructions, work piece 14 will move along feed 34 in the direction of arrow X and be rotated in the direction of arrow Y. Thus, portion 27 will be heated by heat source 16 prior to being machined by tool 12. Un-machined end 26 is the raw material portion of work piece 14, while machined end 26 is the completed, downstream portion of work piece 14 that has already been worked on by cutting tool 24.

This process allows for the work piece to be heated prior to being worked on by the cutting tool, allowing pliability of the work piece under the tool. At the same time, the cryogenically cooled tool allows for longer tool life and more aggressive machining techniques with no environmental waste. This occurs because liquid nitrogen, used as a cryogenic coolant, evaporates in to the atmosphere as nitrogen gas and does not leave any other run-off.

### Discussion of Possible Embodiments

The following are non-exclusive descriptions of possible embodiments of the present invention.

A machining system includes a cutting tool configured to cut a work piece, a cooling scheme configured to cool the cutting tool, and a heat source located upstream relative to the cutting tool. The cooling scheme includes a cryogenic coolant and circuitry configured to supply the cryogenic coolant to the cutting tool. The heat source is directed at the work piece, wherein the heat source is configured to heat the work piece before the heated work piece is machined by the cutting tool.

The system of the preceding paragraph can optionally include, additionally and/or alternatively, any one or more of the following features, configurations and/or additional components:
The cooling system comprises one or more channels inside the cutting tool configured to deliver the cryogenic coolant to an internal surface of the cutting tool.

The cooling system comprises a nozzle configured to deliver the cryogenic coolant to an external surface of the cutting tool.

The system includes a controller connected to the cutting tool and to the heat source. The controlled is configured to provide instructions to control the operation of both the cutting tool and the heat source.

The system includes a user interface.

The heat source is a laser.

The heat source is a heating coil.

A method for machining includes providing instructions to a machining system, wherein the instructions direct the movement and cutting action of a cutting tool, the movement and heating action of a heat source; cooling the cutting tool with a cryogenic coolant; applying heat to the work piece upstream through the heat source according to the instructions, wherein heating the work piece occur before the work piece reaches the cutting tool; and cutting the work piece according to the instructions.

The method of the preceding paragraph can optionally include, additionally and/or alternatively, any one or more of the following features, configurations and/or additional components:
The cryogenic coolant is applied to an external surface of the cutting tool.

The cryogenic coolant is applied to an internal surface of the cutting tool.

The heat source is a laser.

The heat source is a heating coil.

A machining system includes a cutting tool configured to cut a work piece, means for cooling the cutting tool, and a heat source located upstream relative to the cutting tool. The cooling scheme includes a cryogenic coolant and circuitry configured to supply the cryogenic coolant to the cutting tool. The heat source is directed at the work piece, wherein the heat source is configured to heat the work piece before the cutting tool cuts the work piece.

The system of the preceding paragraph can optionally include, additionally and/or alternatively, any one or more of the following features, configurations and/or additional components:
The means for cooling the cutting tool comprises one or more channels internal to the cutting tool configured to deliver the cryogenic coolant inside the cutting tool.

The means for cooling the cutting tool comprises a nozzle configured to deliver the cryogenic coolant to the cutting tool.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A machining system (10) comprising:
a cutting tool (12; 24) configured to machine a work piece (14);
a cooling system configured to cool the cutting tool (12; 24), wherein the cooling system is configured to deliver a cryogenic coolant to the cutting tool (12; 24); and
a heat source (16) directed at the work piece (14), wherein the heat source (16) is positioned with respect to the cutting tool (12; 24) such that the work piece (14) is heated prior to being machined by the cutting tool (12; 24).

2. The system of claim 1, wherein the cooling system comprises one or more channels (31) inside the cutting tool (12) configured to deliver the cryogenic coolant to an internal surface of the cutting tool (12).

3. The system of claim 1, wherein the cooling system comprises a nozzle (33) configured to deliver the cryogenic coolant to an external surface of the cutting tool (24).

4. The system of claim 1, 2 or 3, and further comprising a controller (18) connected to the cutting tool (12; 24) and to the heat source (16), wherein the controller (18) is configured to provide instructions to control the operation of both the cutting tool (12; 24) and the heat source (16).

5. The system of claim 4 and further comprising a user interface (20).

6. The system of any preceding claim, wherein the heat source (16) is a laser (30).

7. The system of any of claims 1 to 5, wherein the heat source (16) comprises a heating coil.

8. A method of machining comprising:
providing instructions to a machining system (10), wherein the instructions direct the movement and cutting action of a cutting tool (12; 24) and the movement and heating action of a heat source (16);
cooling the cutting tool (12; 24) with a cryogenic coolant;
applying heat to the work piece (14) using the heat source (16) according to the instructions, wherein a portion of the work piece (14) is heated prior to the portion of the work piece (14) reaching the cutting tool (12; 24); and
cutting the work piece (14) according to the instructions.

9. The method of claim 8, wherein the cryogenic coolant is applied to an external surface of the cutting tool (24).

10. The method of claim 8, wherein the cryogenic coolant is applied to an internal surface of the cutting tool (12).

11. The method of claim 8, 9 or 10, wherein the heat source (16) is a laser (30).

12. The method of claim 8, 9 or 10, wherein the heat source (16) is a heating coil.

13. A machining system (10) comprising:
a cutting tool (12; 24) configured to cut a work piece (14);
means for cooling the cutting tool (12; 24);
a heat source (16) directed at the work piece (14), wherein the heat source (16) is positioned with respect to the cutting tool (12; 24) so that a surface of the work piece (14) is heated upstream of the cutting tool (12; 24), prior to the cutting tool (12; 24) cutting the surface of the work piece (14).

14. The system of claim 13, wherein the means for cooling the cutting tool (12) comprises one or more channels (31) internal to the cutting tool (12) configured to deliver cryogenic coolant inside the cutting tool (12).

15. The system of claim 13, wherein the means for cooling the cutting tool (24) comprises a nozzle (33) configured to deliver cryogenic coolant to the cutting tool (24).
